Europäisches Patentamt

European Patent Office

Office européen des brevets

(19)

(11) Numéro de publication : **0 072 300 B1**

(12) **FASCICULE DE BREVET EUROPÉEN**

(45) Date de publication du fascicule du brevet :
**09.10.85**

(21) Numéro de dépôt : **82401428.6**

(22) Date de dépôt : **30.07.82**

(51) Int. Cl.⁴ : **D 04 H 1/00**

(54) **Procédé et dispositif pour l'amélioration de la distribution sur un organe de réception de fibres véhiculées par un courant gazeux.**

(30) Priorité : **06.08.81 FR 8115282**

(43) Date de publication de la demande :
**16.02.83 Bulletin 83/07**

(45) Mention de la délivrance du brevet :
**09.10.85 Bulletin 85/41**

(84) Etats contractants désignés :
**AT BE CH DE GB IT LI LU NL SE**

(56) Documents cités :
**US-A- 4 263 033**

(73) Titulaire : **ISOVER SAINT-GOBAIN**
**Les Miroirs 18, avenue d'Alsace**
**F-92400 Courbevoie (FR)**

(72) Inventeur : **Battigelli, Jean**
**17 rue Edouard Vaillant**
**F-60200 Rantigny (FR)**
Inventeur : **Plantard, Dominique**
**1 rue des Eaux**
**F-75016 Paris (FR)**

(74) Mandataire : **Le Vaguerese, Sylvain Jacques et al**
**SAINT-GOBAIN RECHERCHE 39, quai Lucien Lefranc**
**F-93304 Aubervilliers Cedex (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

# 0 072 300

## Description

L'invention est relative au dépôt sur un organe de réception de fibres véhiculées par des courants gazeux. Ces fibres sont notamment des fibres minérales, telles que des fibres de verre ou analogues, portées par les courants gazeux utilisés lors de leur formation et qui sont rassemblées sur un organe collecteur pour constituer des matelas ou des produits similaires.

En raison de son importance il est fait particulièrement référence au domaine de la production des matelas de fibres minérales. Il va de soi néanmoins que l'invention est applicable à tous les types de fibres transportées par des courants gazeux jusqu'à un organe de réception et pour lesquels il est souhaitable d'avoir une bonne répartition sur l'aire de réception de cet organe.

Une répartition uniforme est nécessaire pour que les matelas de fibres ou produits analogues présentent de bonnes propriétés tant mécaniques qu'isolantes.

Habituellement la formation des fibres précède immédiatement celle du matelas et les gaz utilisés pour l'étirage servent aussi au transport des fibres de sorte que les caractéristiques des courants gazeux mis en œuvre sont principalement commandées par les conditions fixées pour l'opération de formation.

La répartition des fibres sur l'organe de réception est étroitement liée aux caractéristiques géométriques de l'installation et à la structure du courant gazeux.

Dans l'exposé suivant les courants gazeux sont présentés comme si leur structure et en particulier leurs limites étaient parfaitement déterminées. Ceci n'est évidemment qu'une simplification commode pour illustrer les phénomènes qui se développent. Un courant gazeux qui se propage librement dans l'atmosphère subit une profonde transformation. Il entraîne l'air ambiant au contact duquel il se trouve, et son volume a tendance à s'accroître. Simultanément une partie de son énergie initiale est communiquée à l'air induit et la vitesse diminue. Ces deux modifications sont plus sensibles à la périphérie qu'au cœur du courant.

On constate aussi expérimentalement, que les fibres véhiculées depuis le départ ne se trouvent pas réparties de façon uniforme. Dans le courant qui va en s'amplifiant elles sont plus abondantes au centre qu'à la périphérie. En outre la vitesse du courant est plus élevée au centre. Pour ces raisons le dépôt des fibres est plus important sur la partie de l'organe de réception située sur le trajet du cœur du courant.

Par ailleurs le dispositif initial d'où émanent les fibres est ordinairement de dimensions relativement petites par rapport à celles des enceintes dans lesquelles les fibres sont acheminées et surtout par rapport à l'organe sur lequel les fibres sont recueillies. Il en est souvent de même du courant gazeux qui véhicule les fibres au niveau de l'organe de réception ce qui accentue la difficulté de l'obtention d'une répartition uniforme des fibres.

En effet le courant gazeux traverse l'organe de réception qui retient les fibres — il s'agit habituellement d'un tapis convoyeur perforé — et le cheminement des gaz à travers cet organe de réception détermine la répartition des fibres sur celui-ci. Lorsque le courant ne couvre qu'une partie de la surface de réception, les fibres se concentrent essentiellement sur la trajectoire du gaz laissant le reste de la surface peu ou pratiquement pas recouverte.

Les dimensions de l'organe de réception étant commandées en priorité par celles du produit préparé ainsi que par des considérations relatives aux cadences de production des installations, il a été nécessaire de trouver des moyens permettant d'aboutir à une répartition des fibres satisfaisante sur des surfaces même relativement larges.

Une solution proposée pour résoudre ce problème de répartition consiste à canaliser le courant gazeux portant les fibres au moyen d'une conduite mobile animée d'un mouvement de va-et-vient. Le courant gazeux est ainsi dirigé de manière à balayer toute la surface de l'organe de réception. Des mécanismes compliqués font varier la direction et la vitesse de déplacement de la conduite mobile.

Du fait de la complexité du système mécanique et du manque de fiabilité qui en résulte, il semble préférable d'éviter autant que possible d'avoir recours à ce type de dispositif.

Une autre solution proposée consiste à diriger des jets isolés transversalement au trajet du courant portant les fibres, pour compenser certains déséquilibres systématiques observés, un côté de la surface de l'organe de réception recevant par exemple plus de fibres que le côté opposé. L'utilisation de jets a été également envisagée pour communiquer au courant gazeux portant les fibres le mouvement de va-et-vient obtenu précédemment à l'aide des moyens mécaniques, par exemple par le brevet US-A-4 263 033. Ces façons de procéder évitent le recours à des organes mécaniques mais ne sont pas exemptes d'inconvénients. En premier lieu s'il est relativement aisé de déformer le courant gazeux, il est plus difficile d'obtenir qu'une répartition uniforme corresponde à cette déformation. En deuxième lieu la modification de l'écoulement par l'impact de jets répartis de façon discontinue crée des turbulences indésirables. Ces turbulences peuvent occasionner par exemple la formation de mèches défavorables à la qualité du produit final.

Un but de l'invention est d'améliorer la répartition des fibres sur l'organe de réception et par suite les qualités du produit final.

Un autre but de l'invention est de fournir des moyens qui facilitent cette amélioration, et notamment des moyens qui permettent de modifier l'écoulement du courant gazeux portant les fibres sans présenter les inconvénients des techniques antérieures.

2

Les études qui ont abouti à l'invention ont montré qu'il est possible de modifier l'écoulement normal du courant gazeux portant les fibres, notamment les dimensions transversales de ce courant en l'enveloppant d'une nappe gazeuse de caractéristiques appropriées. Cette nappe gazeuse est produite de façon que sur une partie au moins de son parcours elle longe tangentiellement le courant gazeux à modifier. En plus dans la région où la nappe est tangente au courant gazeux, la direction d'écoulement dans la nappe gazeuse est différente de celle du courant gazeux. Si l'on projette la direction d'écoulement de la nappe dans le plan tangent au courant gazeux, la composante de cette direction est distincte de la direction d'écoulement du courant. Autrement dit, dans le plan tangent, les traces des directions respectives du courant gazeux et de la nappe gazeuse font entre elles un certain angle (qui sera désigné dans la suite par β).

De façon plus imagée la nappe gazeuse qui enveloppe le courant gazeux portant les fibres s'« enroule » autour de ce dernier. Elle est animée d'un mouvement qui, d'une certaine façon, correspond à une rotation autour du courant gazeux.

Le procédé selon l'invention est applicable à des courants gazeux de formes diverses. Dans la pratique les courants les plus usuels présentent une section sensiblement circulaire.

Dans la suite de la description nous considérerons plus spécialement ces courants, étant entendu que ceci n'exclut en aucune façon des courants dont la section présenterait une autre forme qui se prêterait à l'établissement d'une enveloppe gazeuse tangentielle telle qu'indiquée ci-dessus.

La forme du courant gazeux prise en considération ici, est celle qu'il présente au niveau où il entre en contact avec la nappe gazeuse qui l'enveloppe. Cette forme n'est pas nécessairement la même qu'à l'origine, c'est-à-dire dans la zone de formation des fibres. Ainsi pour certains procédés de formation le courant gazeux est émis à partir d'un orifice de section rectangulaire allongée. Au contact de l'air ambiant, on constate une modification rapide de la forme initiale du courant gazeux. Après un trajet relativement court, un écoulement dont la section est pratiquement circulaire se reconstitue.

Ce type de transformation est indépendant de la forme initiale du courant gazeux qui progresse librement dans l'atmosphère. Il peut être mis à profit lorsque la forme initiale du courant gazeux se prête difficilement au contact avec une nappe gazeuse dans les conditions requises par l'invention.

Le report au niveau où le courant présente cette section quasi circulaire facilite la mise en œuvre de la nappe gazeuse.

Les caractéristiques des courants à section circulaire se modifient aussi au cours de leur progression comme nous l'avons dit. Ils ont tendance à s'épanouir sous forme d'un cône au contact avec l'atmosphère environnante. Dans les conditions habituelles, cet épanouissement est relativement lent. L'angle d'ouverture du cône est faible (de l'ordre de 20°).

Pour un courant dont la section transversale est circulaire la nappe tangente selon l'invention se présente à l'origine sous la forme d'un hyperboloïde de révolution dont l'axe se confond avec celui du courant gazeux.

En progressant il va de soi que la nappe gazeuse se déforme également par son contact d'une part avec le courant gazeux qu'elle modifie et d'autre part avec l'atmosphère ambiante.

En opérant comme on vient de l'indiquer selon l'invention, on obtient un courant gazeux combiné qui s'épanouit plus rapidement que le courant initial. Autrement dit l'angle d'ouverture du cône est accru de telle sorte que sans modifier les positions respectives du dispositif de formation des fibres et de l'organe de réception, il devient possible d'obtenir que la totalité de la surface de réception des fibres soit traversée uniformément par le courant gazeux.

La complexité du mécanisme d'interaction entre le courant et la nappe gazeuse ne se prête pas à une parfaite analyse. Deux phénomènes peuvent servir de modèles pour expliquer l'action de la nappe gazeuse :

Le mouvement en partie « rotatoire » des gaz de la nappe, crée une sorte de vortex. La zone située à l'intérieur de la nappe se trouve en dépression par rapport à la nappe elle-même. Le courant gazeux qui est dirigé dans cette zone a tendance à combler cette dépression et se trouve donc « aspiré » vers la nappe formant enveloppe.

Par ailleurs la nappe gazeuse favorise l'induction d'un mouvement suivant sa propre direction dans le courant gazeux au contact duquel elle se trouve. La composante tangentielle du mouvement de la nappe est en partie transférée au courant. Il se développe au sein de celui-ci un mouvement des gaz vers l'extérieur sous l'effet de la force centrifuge.

Chacun de ces phénomènes ne rend que partiellement compte du mécanisme du mouvement des gaz. En pratique on ne peut constater qu'une combinaison d'effets qui ne sont pas dissociables. Quel que soit le mécanisme, le résultat est l'accroissement de l'angle d'épanouissement du courant gazeux comme il ressort des exemples de mises en œuvre indiqués plus loin.

Le choix des conditions de mise en œuvre de l'invention est étroitement lié au courant gazeux portant les fibres de même qu'aux caractéristiques de l'installation. Les meilleures conditions doivent donc être déterminées dans chaque cas en tenant compte des condisérations exposées ci-après.

L'ampleur de la modification du courant gazeux obtenue selon l'invention dépend de nombreux facteurs.

Il va de soi qu'un premier élément important pour la modification du courant gazeux est la géométrie de la nappe gazeuse qui l'enveloppe. Nous avons vu que dans le plan tangent la direction d'écoulement

3

de la nappe présentait une composante non confondue avec celle du courant gazeux. Dans ce plan, l'angle entre les deux directions peut varier dans des limites relativement larges.

Pour des raisons évidentes concernant le bon écoulement du courant, la direction de la nappe ne peut se trouver même partiellement à contre-courant. En d'autres termes, l'angle entre les directions du courant et de la nappe, toujours dans le plan tangent, ne peut pas être supérieur à 90°. En fait, un angle trop voisin de 90° se traduirait par un effet très localisé, le gaz de l'enveloppe s'écartant très rapidement du courant aurait peu d'effet sur celui-ci.

De la même façon un angle très faible entre ces directions se traduirait par un effet très limité. La nappe gazeuse envelopperait bien le courant mais ne modifierait pas sensiblement sa trajectoire.

En pratique pour que la nappe enveloppe bien le courant et en même temps lui communique un certain mouvement, on préfère que l'angle entre les directions soit compris entre 5 et 60° (de part et d'autre) et plus particulièrement entre 10 et 45°.

Dans ce qui précède, et en considérant la géométrie des flux gazeux au niveau où la nappe entre en contact avec le courant, nous avons parlé de la composante de la direction d'écoulement de la nappe dans le plan tangent au courant gazeux portant les fibres, mais cette direction n'est pas nécessairement entièrement dans le plan tangent. Il peut être avantageux pour certains cas de lui donner également une composante radiale dans le plan transversal à l'écoulement du courant gazeux.

Pour une composante radiale dirigée vers l'intérieur du courant la nappe gazeuse va d'abord en se resserrant, puis s'évase de nouveau suivant une ouverture qui est fonction, comme précédemment, de l'angle de la direction d'écoulement de la nappe par rapport à la direction du courant dans le plan tangent. Le resserrement initial du courant sous l'effet de la nappe n'empêche pas l'accroissement de l'angle d'épanouissement du courant. Cet accroissement n'est que repoussé plus en aval.

La présence de cette composante radiale peut être utile notamment lorsque de façon indépendante de la question de la distribution des fibres sur l'organe de réception il apparaît préférable de ne pas accroître trop tôt la section du courant gazeux. Il peut s'agir par exemple d'éviter que certaines parties de l'appareillage ne se trouvent sur la trajectoire du courant gazeux. Il peut être préférable également de resserrer le courant gazeux pour procéder à une opération de traitement, une pulvérisation par exemple.

La formation d'un resserrement sur le chemin du courant ne doit pas perturber les caractéristiques générales de ce courant. Autrement dit, cet effet doit être relativement limité, ou ce qui est équivalent la composante radiale de la direction de la nappe gazeuse doit être faible par rapport aux autres composantes, faute de quoi la nappe gazeuse dirigée de façon trop accentuée vers l'intérieur du courant créerait des turbulences désorganisant l'écoulement normal.

La mesure relative de la composante radiale dans le plan comprenant le point de contact de la nappe avec le courant et l'axe du courant, est exprimée par l'angle de cet axe et de la projection de la direction d'écoulement de la nappe. Cet angle que nous désignerons par n'est de préférence pas supérieur à 20° lorsque la composante radiale est dirigée vers l'intérieur du courant.

Le plus fréquemment, la composante radiale comme nous l'avons indiqué ci-dessus est dirigée vers l'intérieur du courant. Elle peut cependant être dirigée vers l'extérieur. Dans ce cas un angle de 45° constitue une limite qu'il est préférable de ne pas dépasser.

La forme de la nappe gazeuse enveloppant le courant n'est pas le seul facteur qui détermine la modification du courant portant les fibres. L'ampleur de cette modification est également liée aux quantités de mouvement ou impulsions respectives du courant et de la nappe gazeuse.

Pour que l'effet de la nappe gazeuse sur le courant soit notable, il faut que les impulsions soient d'un ordre de grandeur comparable, au niveau où l'action se développe. Une nappe présentant une impulsion trop faible laisserait le courant pratiquement inchangé. Inversement il n'est pas nécessaire ou même souhaitable d'utiliser une nappe à trop forte impulsion, l'accroissement du coût de production de cette nappe gazeuse n'entraînant pas nécessairement une amélioration supplémentaire du résultat.

L'impulsion a pour expression :

$$I = \rho \cdot v^2 \cdot S$$

étant la masse volumique du flux gazeux considéré, v sa vitesse et S sa section droite. Il apparaît avantageux pour la mise en œuvre de l'invention de maintenir le rapport de l'impulsion de l'enveloppe $I_S$ à celle du courant $I_B$ dans les limites :

$$0,5 \leq I_S/I_B \leq 2$$

Ces valeurs sont données pour le cas préféré, c'est-à-dire celui dans lequel la nappe gazeuse est émise à proximité immédiate du courant gazeux portant les fibres. Si, comme cela est possible dans une certaine mesure, la nappe gazeuse est engendrée à distance du courant, le rapport $I_S/I_B$ peut être accru dans des proportions importantes. Il faut en effet tenir compte de l'influence de l'air ambiant sur la nappe. Plus le point d'émission de la nappe est éloigné du courant, plus importante est la part de l'impulsion qui est dissipée au contact de l'air ambiant. Pour obtenir le même effet sur le courant on est alors conduit à accroître l'impulsion initiale de la nappe.

Un avantage du procédé de modification de la répartition des fibres selon l'invention est qu'il est possible de modifier instantanément les paramètres de mise en œuvre pour tenir compte d'irrégularités intervenant dans les conditions de formation du matelas de fibres. En faisant varier la pression dans le dispositif émettant la nappe gazeuse on fait varier la vitesse et par suite l'impulsion de la nappe.

Par des essais préalables on peut déterminer pour chaque pression la modification du courant gazeux correspondante comme nous le verrons dans les exemples de mise en œuvre de l'invention.

La localisation de la nappe gazeuse, ou plus précisément celle de son action sur le courant gazeux, dépend essentiellement de la structure du courant et de l'influence de cette structure sur les fibres.

Nous avons dit qu'il était avantageux de situer cette action en un point où le courant présente une section circulaire. Nous pouvons ajouter qu'il est préférable d'opérer sur un courant dont l'écoulement est bien défini ce qui implique que l'action de la nappe se situe à une distance modérée du point d'émission du courant gazeux. Dans le même sens, étant donné que la modification du courant gazeux obtenu selon l'invention consiste en l'accroissement de l'angle d'ouverture du courant, pour que cet accroissement se traduise par un élargissement notable du courant au niveau de l'organe de réception, il est nécessaire que la modification soit effectuée à une distance suffisante de l'organe de réception.

De façon générale si, à l'origine, les fibres sont bien dispersées dans le courant gazeux, le fort ralentissement qu'il subit avant de parvenir à l'organe de réception et les turbulences qui en résultent tendent à rompre cette régularité. Il apparaît préférable de modifier le courant gazeux selon l'invention avant que ces défauts dans la régularité de la dispersion ne se manifestent.

Un cas particulièrement important du point de vue industriel peut illustrer le rôle de la structure du courant sur les fibres et par suite montrer les raisons du choix de l'emplacement de la nappe gazeuse. Il s'agit des procédés dans lesquels la formation des fibres est conduite au moyen d'un tambour de centrifugation qui fait également office de filière. Dans ce type de procédé l'étirage des fibres est complété par soufflage d'un courant gazeux transversalement à la projection des fibres hors du tambour. Le soufflage se fait de façon annulaire à la périphérie du tambour de centrifugation au voisinage immédiat de celui-ci.

La progression du courant gazeux à partir de l'origine est la suivante. Immédiatement en aval du tambour de centrifugation se forme une légère dépression par suite de l'entraînement des gaz de cette zone par le courant gazeux annulaire. Du fait de cette dépression, le courant gazeux se rassemble (et se resserre) en aval du tambour puis s'épanouit de nouveau comme les courants coniques dont nous avons parlé précédemment. En plus de ces modifications de forme, le courant gazeux subit bien évidemment un fort ralentissement au contact de l'air ambiant.

Les fibres forment une sorte de voile continu entraîné par le courant. Le ralentissement et le resserrement en aval du tambour occasionnent des plissements et des ruptures dans ce voile. Les ruptures qui apparaissent de façon anarchique font que la distribution des fibres, ou ensembles de fibres, n'est pas entièrement homogène dans le courant gazeux au-delà d'une certaine distance de l'organe de formation.

Il est apparu préférable pour ce cas d'effectuer la modification du courant selon l'invention avant que les irrégularités de distribution des fibres dans le courant ne se soient développées de façon sensible. Ceci équivaut approximativement à situer l'action de la nappe gazeuse de préférence avant la zone de resserrement du courant qui se produit en aval du tambour de centrifugation.

Dans tous les cas la nappe gazeuse opère une transformation de l'écoulement du courant portant les fibres sans modifier ces dernières. Son action intervient à un moment où les fibres ne sont plus à l'état étirable. Etant donné le refroidissement rapide des fibres très fines, le soufflage du gaz formant la nappe peut avoir lieu relativement près de la zone de formation des fibres.

Pour les mêmes raisons, le gaz soufflé est à une température inférieure à la température de fusion du matériau constituant les fibres. Avantageusement le gaz est à une température voisine de la température ambiante.

Il va de soi que la nature du gaz soufflé peut être très diverse. Ordinairement, pour des raisons de commodité, il s'agit soit d'air, soit de vapeur d'eau mais d'autres gaz ou mélanges de gaz peuvent être utilisés.

L'invention concerne également des dispositifs pour la mise en œuvre du procédé décrit précédemment. Il s'agit, dans une installation comportant un organe de réception traversé par un courant gazeux et retenant au passage les fibres portées par ce courant, de moyens disposés en amont de cet organe de réception sur le trajet du courant et engendrant une nappe gazeuse enveloppant le courant.

Ces moyens sont munis d'orifices à partir desquels la nappe gazeuse est émise. Les orifices sont disposés autour du courant et sont dirigés de façon que la nappe présente les caractéristiques rappelées précédemment. En particulier la direction des orifices émetteurs dans le plan tangent à la périphérie du courant gazeux au point de contact avec celui-ci, est différente de la direction d'écoulement du courant.

Dans le cas préféré, le courant présentant une section circulaire, il est avantageux d'engendrer la nappe gazeuse à partir d'un souffleur annulaire entourant le courant.

La nappe gazeuse et par conséquent le souffleur sont de préférence aussi proches que possible du courant gazeux, sans former un obstacle sur le trajet de celui-ci. On peut considérer dans ces conditions que le souffleur est en position tangente par rapport au courant gazeux. L'angle de la direction des orifices d'émission de la nappe gazeuse avec l'axe du souffleur est alors de préférence compris entre 10 et 60°.

Comme nous l'avons dit précédemment aussi à propos de la direction d'écoulement de la nappe, la direction des orifices peut aussi présenter une composante radiale. La présence de la composante radiale est particulièrement avantageuse lorsque le souffleur annulaire est légèrement écarté de la périphérie du courant ou encore lorsque le souffleur est disposé en un point où le courant a tendance à se resserrer pour les raisons que nous avons vues plus haut.

Si l'effet de la nappe gazeuse peut être modifié en faisant varier la pression du gaz dans le souffleur, il est également possible dans une certaine mesure de modifier instantanément la direction d'écoulement de la nappe gazeuse. La modification mécanique du souffleur, théoriquement possible, est peu souhaitable en raison de la complexité et du manque de fiabilité qui en résulteraient.

Pour modifier cette direction, il est avantageux de disposer côte à côte deux souffleurs annulaires dont les directions d'émission sont distinctes l'une de l'autre. Les orifices de ces deux souffleurs sont suffisamment proches les uns des autres pour que leurs jets gazeux fusionnent rapidement. Une nappe gazeuse combinée est ainsi formée, dont les caractéristiques, et en particulier la direction, dépendent des caractéristiques de chacun des souffleurs.

A titre d'exemple un des souffleurs peut présenter des orifices dont la direction est celle du courant, tandis que la direction des orifices de l'autre souffleur est nettement inclinée par rapport à la direction du courant. L'impulsion (réglée par la pression) de chacun des deux souffleurs détermine la direction d'écoulement de la nappe combinée.

Les dispositifs selon l'invention que nous venons de décrire permettent sans modification de structure, de changer la direction d'écoulement de la nappe de façon instantanée. Comme pour les variations de pression appliquées aux souffleurs uniques, on peut ainsi corriger la distribution des fibres en fonction d'une mesure effectuée de façon permanente sur le produit préparé. Il est possible aussi d'assujettir le fonctionnement du dispositif à un organe de commande automatique relié aux instruments de contrôle du produit.

L'invention est décrite plus en détail dans la suite de la description qui fait référence aux planches de dessins dans lesquelles :

les figures 1a et 1b   montrent de façon schématique le mode de répartition des fibres en l'absence de mise en œuvre de l'invention,

les figures 2a et 2b   montrent comment se présente la direction de la nappe gazeuse vis-à-vis du courant gazeux,

les figures 3a et 3b   représentent de façon schématique la forme de l'écoulement gazeux modifié selon·l'invention,

la figure 4   est une coupe partielle d'un dispositif de soufflage pour former la nappe gazeuse selon l'invention,

la figure 5a   est une coupe présentant une adaptation du dispositif de soufflage, selon l'invention, à un ensemble de formation de fibres par centrifugation,

la figure 5b   est une vue partielle de la figure 5a sur laquelle est représenté le cheminement approximatif des flux gazeux,

la figure 5d   est une autre vue partielle d'un dispositif du type de celui de la figure 5a, présentant une autre position du dispositif de soufflage,

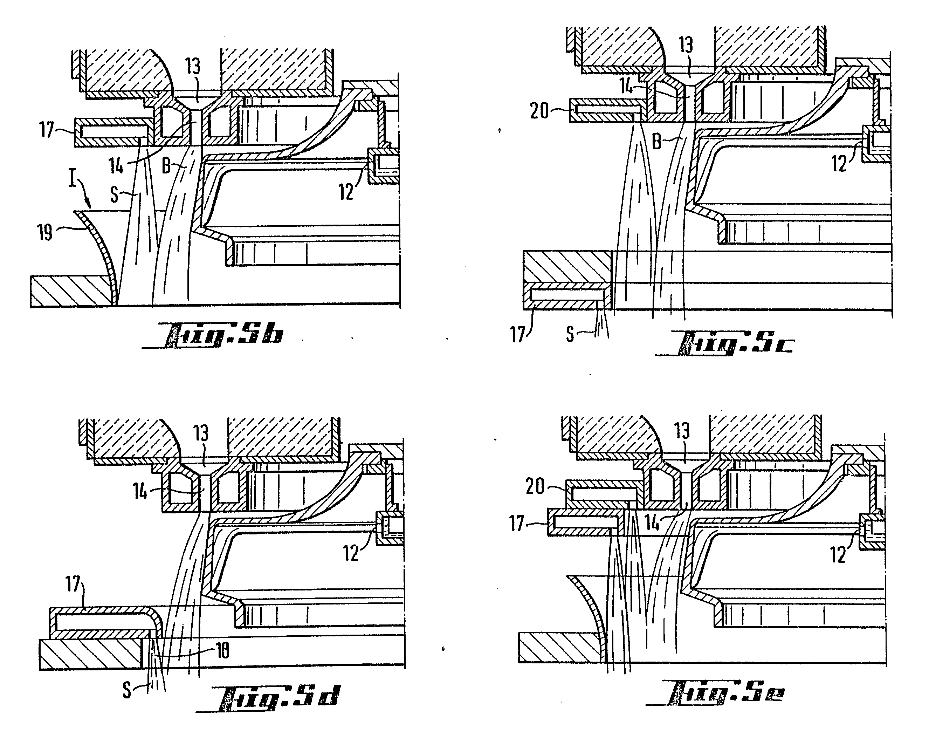

les figures 5c et 5e   sont deux autres vues partielles d'installations analogues à celle de la figure 5a, dans lesquelles un double dispositif de soufflage est représenté,

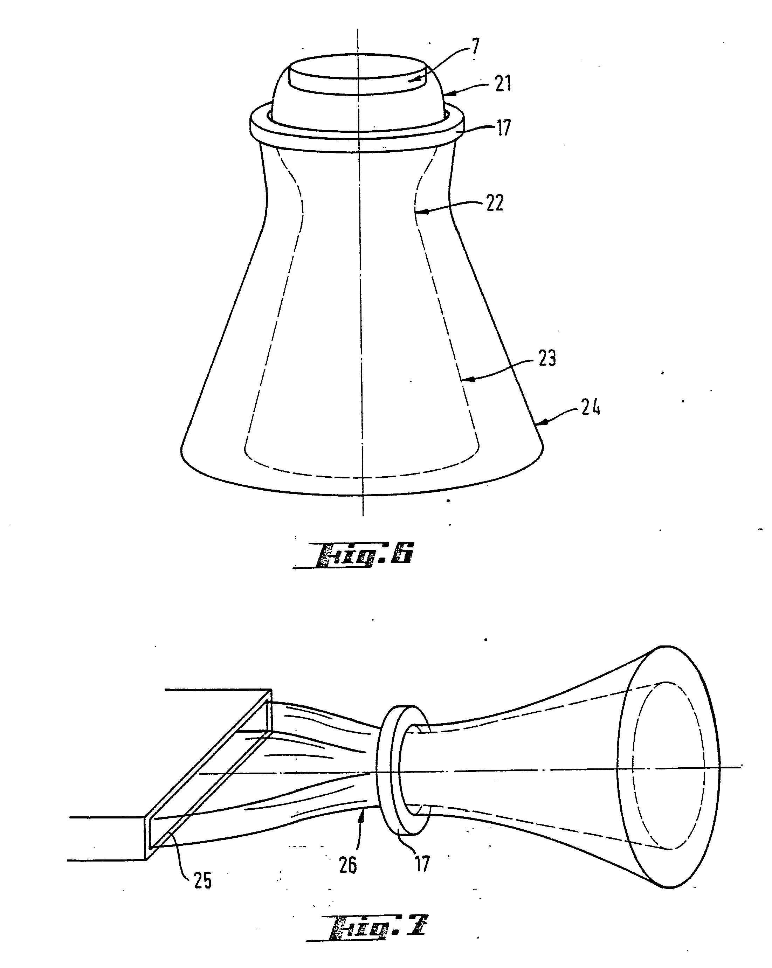

la figure 6   est une vue schématique en perspective d'un ensemble centrifuge de formation de fibres, muni d'un souffleur selon l'invention, montrant l'influence de ce dernier sur la trajectoire du courant gazeux,

la figure 7   est une représentation schématique montrant la déformation d'un courant gazeux, rectangulaire à l'origine, au contact de l'air ambiant, et l'action d'un souffleur selon l'invention.

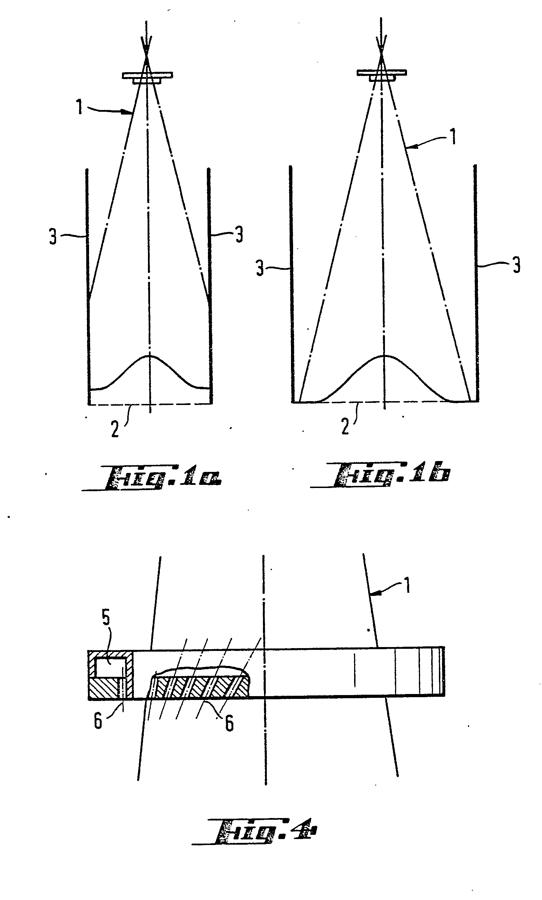

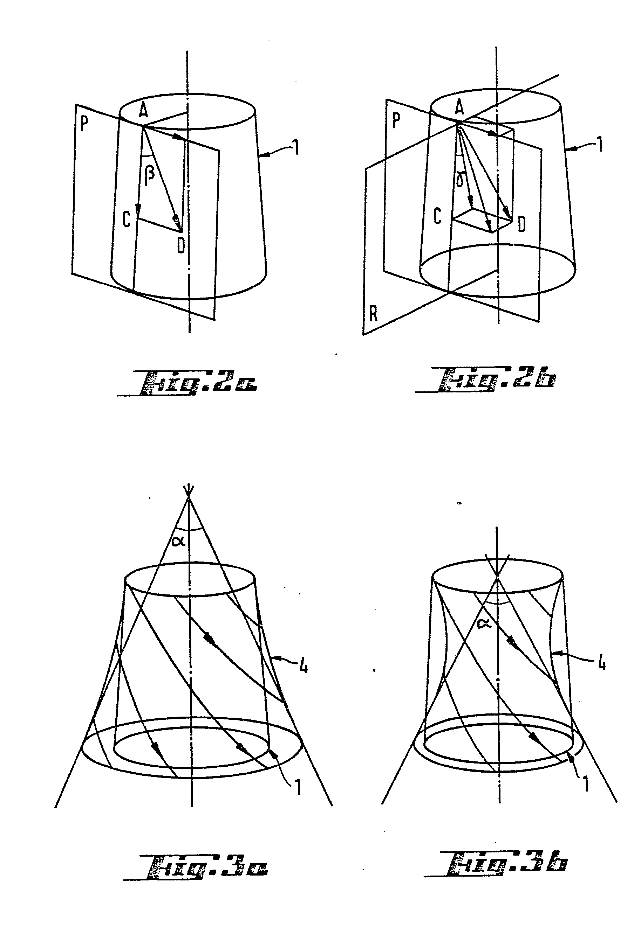

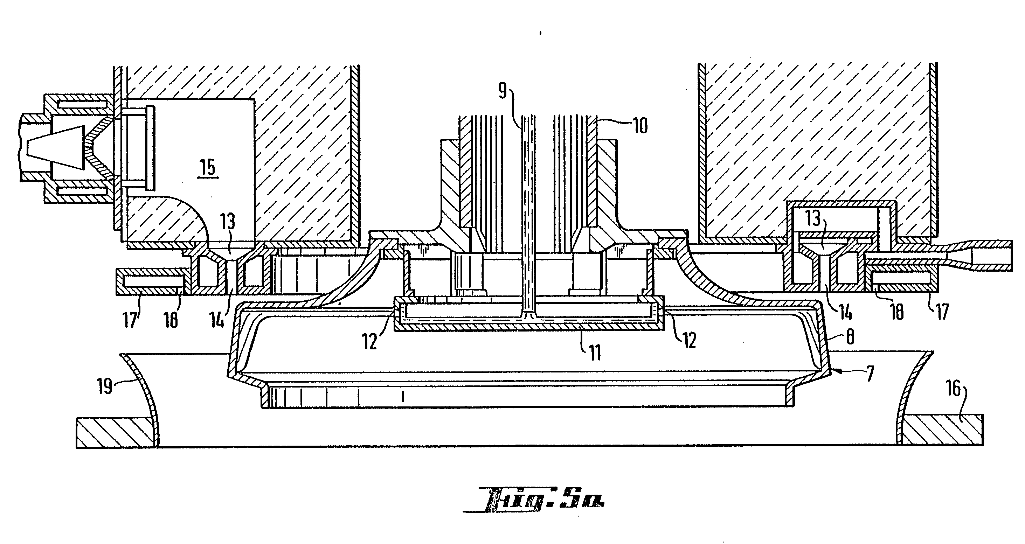

Les figures 1a et 1b illustrent le type de répartition des fibres sur un organe de réception lorsque ce dernier est relativement large par rapport au courant gazeux portant les fibres.

Le courant gazeux 1 est schématisé par ce que l'on peut considérer comme ses limites. En fait si à l'origine, ces limites sont relativement bien déterminées, elles sont beaucoup moins franches au fur et à mesure que l'on progresse vers l'organe de réception 2. De façon approximative les limites représentées sont celles dans lesquelles le courant gazeux considéré véhicule de l'ordre de 95 % de la fibre produite. Quoiqu'il en soit on constate que la répartition en l'absence de modification du courant s'effectue approximativement suivant un profil en cloche.

Cette distribution est plus ou moins modifiée suivant que le courant gazeux présente une section plus ou moins grande par rapport aux dimensions de la surface de réception. Dans les cas représentés le courant 1 reste identique et les dimensions de la chambre et de l'organe de réception sont changées.

Les parois latérales 3 de la chambre de réception font obstacle à l'épanouissement complet du courant dans le cas de la figure 1a. Il en résulte un accroissement de la quantité de fibres recueillies sur les bords de l'organe de réception. Cet effet des parois latérales, ou ce qui est équivalent, de la présence d'un courant large par rapport aux dimensions de la surface de réception, montre de façon très simplifiée comment l'élargissement du courant selon l'invention permet d'améliorer la répartition des fibres.

La structure de la nappe modifiant l'écoulement du courant gazeux portant les fibres est détaillée aux figures 2a et 2b.

6

Ces figures présentent en perspective un courant gazeux 1 de forme conique. La nappe gazeuse en un point A de contact avec le courant est déterminée par sa direction d'écoulement D.

Pour le cas représenté à la figure 2a la direction D est entièrement dans le plan P tangent au courant gazeux au point A. La direction D est caractérisée par l'angle β qu'elle fait avec la direction d'écoulement C du courant gazeux au point A.

A la figure 2b la direction d'écoulement de la nappe au point A présente en plus une composante radiale. Cette composante se situe dans le plan R orthogonal au plan P passant par l'axe du courant. La mesure de l'angle γ de la projection de D sur le plan R, avec la direction du courant C caractérise la composante radiale de la direction D.

Ces figures présentent la direction D au point A de la périphérie du courant. La direction en un point quelconque est celle que l'on obtient par rotation de la figure autour de l'axe du courant.

Dans ces figures 2a et 2b la direction C d'écoulement du courant est représentée le long d'une génératrice du cône constituant le pourtour du courant gazeux. Dans la pratique, on peut constater certaines modifications de cette direction. En particulier dans les procédés mettant en œuvre un organe rotatif, la direction d'écoulement peut faire un angle (qui ne dépasse pas ordinairement quelques degrés) avec les génératrices du cône. Les indications données dans la suite qui se rapportent à la direction d'écoulement restent néanmoins applicables.

La forme de l'écoulement 4 résultant de l'action de la nappe gazeuse selon l'invention est schématisée aux figures 3a et 3b qui correspondent respectivement aux cas des figures 2a et 2b, c'est-à-dire sans composante radiale et avec une composante radiale dirigée vers l'intérieur du courant.

Dans les deux cas, on fait figurer en traits fins l'écoulement du courant 1 en l'absence de la nappe gazeuse, et en traits forts l'écoulement 4 formé par la combinaison de la nappe et du courant.

L'angle α marque l'épanouissement du courant gazeux. Comme nous l'avons indiqué, sans la modification introduite selon l'invention, il est peu ouvert (de l'ordre de 20°). Dans les deux cas représentés l'angle α pour l'écoulement combiné est sensiblement accru, même si pour le cas de la figure 2b le courant subit d'abord un resserrement.

La production de la nappe gazeuse selon l'invention peut être obtenue au moyen d'un dispositif du type représenté à la figure 4. Ce dispositif, destiné à modifier un courant de section circulaire, est de forme annulaire. Il entoure le courant gazeux 1 d'aussi près qu'il est possible sans le perturber.

Il est constitué d'une couronne de soufflage comprenant une chambre annulaire 5 conduisant un gaz sous pression. Les moyens d'alimentation en gaz ne sont pas représentés. Ce gaz s'échappe par une série d'orifices 6 disposés à la base de la chambre et sur toute la périphérie de celle-ci. Les orifices 6 ont une inclinaison constante par rapport à l'axe du dispositif. Leur direction ne présente pas de composante radiale sur cette figure.

Les orifices 6 sont suffisamment proches les uns des autres pour que les jets individuels, du fait de leur expansion, s'écoulent sous forme d'une nappe pratiquement continue le long du courant gazeux 1.

La couronne de soufflage représentée ne comporte qu'une seule série d'orifices 6 ; il est bien évidemment possible de disposer plusieurs séries d'orifices concentriques au même niveau ou à des niveaux différents.

Sur cette figure, les orifices sont constitués par des rainures ménagées dans la pièce formant le fond de la chambre 5. Les rainures sont closes latéralement par la pièce formant le couvercle de cette même chambre.

D'autres dispositions conférant la direction souhaitée peuvent être utilisées. Une disposition consiste à émettre une nappe de gaz par une fente continue, la direction de l'écoulement étant assurée par exemple au moyen d'ailettes inclinées disposées à intervalles réguliers dans cette fente sur le trajet de la nappe gazeuse.

Plusieurs dispositifs du type représenté à la figure 4 peuvent être utilisés simultanément pour combiner leurs effets. Dans ce cas les dispositifs, et plus précisément leurs orifices d'émission respectifs sont de préférence agencés de façon suffisamment proche pour que les différentes nappes gazeuses formées fusionnent.

La figure 5a montre un mode de mise en œuvre de l'invention en liaison avec un appareil de formation de fibres par centrifugation.

L'appareil représenté a été décrit en détail dans la demande de brevet français publiée n° 2 459 783.

Cet appareil comprend un centrifugeur désigné dans son ensemble par la référence 7. Ce centrifugeur présente à sa périphérie 8 des orifices 12 par lesquels le matériau à fibrer s'échappe.

Le matériau à fibrer 9 est amené par l'arbre creux 10. Il tombe dans un panier de distribution 11 entraîné aussi en rotation, et de là, est projeté à travers les orifices 12 sur la paroi intérieure périphérique du centrifugeur.

Les filaments non représentés qui se détachent de la paroi 8 sous l'effet de la force centrifuge sont soumis à un courant gazeux transversal provenant d'une chambre annulaire 13 munie d'une tuyère annulaire 14. La chambre 13 est alimentée par une ou plusieurs chambres de combustion 15.

Les gaz de combustion, dans ce dispositif, constituent un courant gazeux qui longe la périphérie 8 du centrifugeur et entraîne les fibres en achevant leur étirage.

Pour chauffer la partie inférieure du centrifugeur, un anneau inducteur à haute fréquence 16 est disposé de façon concentrique au centrifugeur et à une distance suffisante pour laisser libre la trajectoire du courant gazeux portant les fibres.

Dans certains modes de réalisation antérieurs, un dispositif de soufflage supplémentaire peut être ajouté. Ce dispositif de forme annulaire, est concentrique à l'ensemble du centrifugeur 7 et de la tuyère du brûleur 14. Il dirige des jets gazeux parallèlement à l'axe du centrifugeur, c'est-à-dire parallèlement au courant gazeux émis par le brûleur. Le rôle essentiel de ce souffleur est de canaliser les fibres qui parviendraient à traverser le courant gazeux du brûleur pour éviter qu'elles se dispersent dans l'atmosphère environnante. Le soufflage supplémentaire limite aussi l'expansion du courant gazeux émanant du brûleur et facilite donc le passage du courant dans les limites définies par l'inducteur 16.

Selon un mode de réalisation de l'invention, un souffleur 17 dont les orifices sont inclinés de la façon précisée précédemment est substitué au dispositif de soufflage de la demande précitée.

Sur la figure 5a ou 5b et selon l'invention, les orifices 18 du souffleur 17 sont situés sensiblement au même niveau que la tuyère 14 et à distance de celle-ci. Cette distance est plusieurs fois égale à la largeur de la tuyère 14, de sorte que le point de concours de la nappe gazeuse S émise par le souffleur annulaire 17 et du courant gazeux B provenant de la tuyère 14 se situe au niveau de l'extrémité inférieure du centrifugeur 7 ou même au-delà comme représenté sur la figure 5b.

Les fibres entraînées par le courant B sont donc déjà formées au niveau où la nappe S modifie l'écoulement du courant B.

L'ensemble de la nappe S, du courant B et également des gaz induits I (représentés par une flèche indiquant leur direction générale) passe dans l'anneau inducteur 16. Pour éviter la formation de tourbillons, un conformateur 19 destiné à canaliser les différents flux gazeux est disposé sur cet anneau.

Sur la figure 5c, le souffleur 17 est placé cette fois sous l'anneau inducteur 16. La nappe S et le courant B concourent alors pratiquement dès la sortie du souffleur.

La figure 5d montre une autre variante dans laquelle le souffleur est disposé sur l'anneau inducteur. La partie du souffleur 17 exposée au courant gazeux est profilée et tient lieu de conformateur pour éviter la formation de turbulences. Bien entendu il est possible de combiner cette position du souffleur en disposant un conformateur de la même façon que précédemment.

La figure 5e montre un ensemble analogue à celui de la figure 5a ou 5b dans lequel deux souffleurs concentriques sont utilisés simultanément. Les souffleurs sont disposés de façon que leurs orifices respectifs soient très proches les uns des autres, de sorte que les jets émanant des deux souffleurs fusionnent très rapidement pour former une nappe unique avant le point de concours avec le courant B.

La composante tangentielle de la direction de la nappe S enveloppant le courant B est communiquée comme précédemment par le souffleur 17 dont les orifices sont inclinés par rapport à l'axe du centrifugeur, tandis que les orifices du souffleur 20 sont dirigés par exemple parallèlement à l'axe du dispositif.

Comme nous l'avons vu la position du souffleur créant la nappe par rapport au courant gazeux peut varier dans une assez large mesure. Pour les raisons exposées précédemment, il est préférable qu'il se situe en amont du resserrement qui apparaît systématiquement sur le courant gazeux mis en œuvre dans les dispositifs du type de ceux représentés aux figures 5a à 5e.

La figure 6 montre en perspective l'aspect général de l'écoulement gazeux pour ce type de dispositif. La forme caractéristique en l'absence de la nappe gazeuse est indiquée en partie en trait pointillé.

Trois niveaux sont nettement différenciés dans cet écoulement. Près du dispositif centrifugeur le courant forme une sorte de bulbe 21. Il se resserre ensuite sous le centrifugeur 7, en 22, puis s'épanouit de nouveau en un écoulement conique 23.

Le souffleur 17 engendrant la nappe gazeuse est de préférence situé en amont de la zone 22 où le courant présente le minimum de largeur.

L'écoulement modifié 24 combinant la nappe et le courant est représenté en traits pleins.

La figure 7 illustre de façon schématique la transformation subie au contact de l'air ambiant par un courant rectangulaire à l'origine. Les gaz émis à partir de l'orifice rectangulaire 25 se rassemblent rapidement pour prendre la forme qui permet la répartition la plus facile dans l'air ambiant, c'est-à-dire un écoulement de section circulaire. Après le rassemblement réalisé en 26, l'écoulement devient conique comme précédemment. Pour ce type de courant il est avantageux de placer le souffleur engendrant la nappe tangentielle en un point du trajet du courant voisin du point de rassemblement 26.

Le cas de la figure 7 est le cas extrême. Pour des orifices de forme moins oblongue, la reconstitution d'un écoulement de section pratiquement circulaire est très rapide et il est possible de placer un souffleur annulaire très tôt sur le trajet du courant gazeux.

Les exemples suivants ont pour but de montrer à quels types de résultats la mise en œuvre de l'invention permet d'aboutir. Ces exemples n'ont bien évidemment aucun caractère limitatif.

## Exemple 1

Des essais ont été effectués pour déterminer l'action de l'enveloppe gazeuse selon l'invention sur la forme d'un courant gazeux portant des fibres.

Le courant gazeux modifié est celui formé par un appareil de production de fibres analogue à celui représenté à la figure 5a. Au niveau de la couronne de soufflage le courant gazeux est d'environ 340 mm de diamètre.

**0 072 300**

A l'origine, l'impulsion totale de ce courant est de l'ordre de 70 N.

L'angle d'ouverture du courant en l'absence de souffleur est d'environ $\alpha = 20°$.

La couronne de soufflage est disposée comme représenté à la figure 5a. Elle présente une série d'orifices disposés sur un cercle de diamètre 380 mm. La section totale d'ouverture de ces orifices est de $5 \times 10^{-4}$ m².

L'axe de chaque orifice du souffleur fait un angle avec l'axe général du dispositif de $\beta = 30°$.

L'angle $\alpha$ mesurant l'ouverture du courant avec les fibres est déterminé pour une série de pressions de l'air du souffleur.

Les résultats sont les suivants :

| Pression en $10^5$ Pa | 0 | 0,45 | 1,05 | 1,4 | 1,8 |
|---|---|---|---|---|---|
| Impulsion N | 0 | 29 | 58 | 74,5 | 94 |
| Angle d'ouverture $\alpha$ | 20° | 25° | 33° | 38° | 42° |

Ces essais montrent qu'en accroissant la pression donc de l'impulsion des gaz du souffleur, l'épanouissement du courant portant les fibres est sensiblement modifié.

Exemple 2

Des essais ont été effectués comme à l'exemple 1, mais cette fois en faisant varier l'angle $\beta$ de la direction de soufflage par rapport à la direction d'écoulement du courant gazeux.

Le dispositif et les conditions de fonctionnement du brûleur sont inchangés. Le courant gazeux est donc identique.

Les dimensions du souffleur sont également les mêmes qu'à l'exemple 1. La pression dans le souffleur est dans tous les essais de $1,4 \times 10^5$ Pa.

La modification du courant gazeux exprimée par la mesure de l'angle $\alpha$ en fonction de plusieurs inclinaisons $\beta$ des jets du souffleur est indiquée dans le tableau suivant.

| $\beta°$ | 10 | 20 | 30 | 45 |
|---|---|---|---|---|
| $\alpha°$ | 28 | 34 | 38 | 45 |

On constate que l'angle d'ouverture $\alpha$ croît dans le même sens que celui de la direction des jets avec la direction d'écoulement du courant dans la totalité du domaine envisagé.

Comme nous l'avons précisé dans le texte, l'angle $\beta$ est de préférence maintenu dans certaines limites. Même s'il est possible d'entraîner des modifications plus importantes en augmentant l'angle $\beta$, le résultat final sur l'écoulement du courant gazeux et la distribution des fibres n'est pas nécessairement avantageux. En augmentant trop l'angle $\beta$ on peut perturber l'écoulement normal du courant gazeux, et par ailleurs un angle $\alpha$ très important n'est pas toujours nécessaire pour obtenir une bonne répartition.

A ce propos il convient de rappeler que l'accroissement de l'angle $\alpha$ du courant gazeux est destiné à améliorer la distribution des fibres sur l'organe de réception notamment lorsque celui-ci est relativement large. Pour chaque installation, et pour chaque configuration du courant gazeux à modifier, (ceci comprend notamment la distance séparant l'origine du courant et l'organe de réception de même que les dimensions de cet organe), il convient de déterminer par des essais préalables l'ampleur nécessaire de la modification du courant effectuée selon l'invention.

Exemple 3

Le procédé selon l'invention est mis en œuvre sur une installation de production de matelas de fibres.

Le dispositif de formation de fibres est comme décrit précédemment du type centrifuge. Il est situé à 3,75 m du tapis convoyeur sur lequel se forme le matelas de fibres. La largeur du convoyeur est de 2 m.

Le centrifugeur de 300 mm de diamètre délivre 14 tonnes de matériau par jour.

Le brûleur délivre un courant gazeux dans les conditions indiquées à l'exemple 1.

On effectue un essai sans utiliser le souffleur. La répartition des fibres sur le matelas montre un très grand manque d'uniformité. Le profil du dépôt est celui en cloche qui apparaît à la figure 1b.

Les variations en poids de fibres dans le matelas, en fonction du point de réception considéré, montrent par rapport à la valeur moyenne des écarts relatifs de $\pm$ 80 % suivant que l'on se situe au centre du tapis ou sur ses bords.

Un essai analogue est effectué cette fois en faisant usage du souffleur. Les caractéristiques de ce souffleur sont celles indiquées à l'exemple 1, avec une pression de $1,4 \times 10^5$ Pa.

La répartition sur le tapis convoyeur est très sensiblement améliorée. Les écarts relatifs par rapport à la valeur moyenne du poids de fibres dans le sens transversal ne dépassent pas 7,5 %.

Ces variations de surcroît ne sont pas reproduites dans l'espace de façon systématique. Leur

9

localisation varie selon l'échantillon considéré. Dans une ligne de production usuelle, plusieurs dispositifs de formation de fibres sont alignés au-dessus du même tapis convoyeur. Les variations correspondant à chacune des « couches » de fibres ont tendance statistiquement à se compenser les unes les autres, si bien que les écarts relevés sur le produit final sont encore sensiblement réduits.

Par ce moyen on obtient donc des matelas de fibres présentant en tous points des qualités tant mécaniques que thermiques bien uniformes. Ces résultats sont obtenus par la mise en œuvre des moyens de l'invention seuls. Il est évidemment possible de combiner ces moyens avec d'autres moyens connus antérieurement tels que ceux qui ont été indiqués au début de la description.

**Revendications**

1. Procédé pour l'amélioration de la distribution sur une surface de réception, de fibres véhiculées par un courant gazeux dirigé vers la surface de réception, caractérisé en ce qu'une nappe gazeuse est dirigée de façon à longer le courant gazeux portant les fibres sur sa périphérie en l'enveloppant, sur une partie de sa trajectoire, la direction d'écoulement de cette nappe gazeuse dans le plan tangent au courant gazeux faisant un angle avec la direction d'écoulement du courant gazeux créant ainsi une dépression dynamique autour du courant gazeux portant les fibres.

2. Procédé selon la revendication 1, caractérisé en ce que le courant gazeux portant les fibres transversalement à son écoulement présente une section sensiblement circulaire et que la nappe gazeuse qui l'enveloppe présente une section annulaire concentrique.

3. Procédé selon la revendication 2, caractérisé en ce que la nappe gazeuse enveloppant le courant gazeux communique au courant gazeux un mouvement de rotation dont l'axe est confondu avec la direction initiale du courant gazeux.

4. Procédé selon l'une quelconque des revendications 1 à 3, caractérisé en ce que le rapport de l'impulsion de la nappe gazeuse $I_S$ à celle du courant modifié $I_B$ est tel que $0,5 \leqslant J_S/I_B \leqslant 2$.

5. Procédé selon l'une quelconque des revendications précédentes, caractérisé en ce que la nappe gazeuse est constituée à partir d'une série de jets individuels.

6. Procédé selon l'une des revendications précédentes, caractérisé en ce que la direction d'écoulement de la nappe dans le plan tangent au courant fait avec la direction d'écoulement du courant un angle compris entre 10 et 60°.

7. Procédé selon l'une des revendications précédentes, caractérisé en ce que la direction de la nappe gazeuse comporte en outre une composante dans le plan orthogonal au plan tangent et qui comprend l'axe du courant gazeux.

8. Procédé selon la revendication 7, caractérisé en ce que le plan orthogonal au plan tangent et comprenant l'axe du courant gazeux, la composante de la nappe gazeuse fait un angle avec la direction d'écoulement du courant qui n'excède pas 20° vers l'intérieur du courant ou 45° vers l'extérieur.

9. Procédé selon l'une quelconque des revendications précédentes, caractérisé en ce que l'action de la nappe gazeuse sur le courant est opérée en un point où les fibres véhiculées sont à l'état solide.

10. Procédé selon l'une quelconque des revendications précédentes, caractérisé en ce que la nappe gazeuse est formée d'air à la température ambiante.

11. Procédé selon l'une quelconque des revendications précédentes, caractérisé en ce que la nappe gazeuse est constituée à partir de deux nappes faisant des angles différents avec la direction d'écoulement du courant gazeux, et que l'on règle l'effet de la nappe résultante en modifiant le rapport de l'impulsion propre à chacune des deux nappes.

12. Dispositif pour l'amélioration de la distribution sur une surface de réception (2), de fibres véhiculées par un courant gazeux (1) dirigé vers cette surface, caractérisé en ce qu'il comprend en amont de la surface de réception, sur le trajet du courant gazeux (1), des moyens (5) engendrant une nappe gazeuse enveloppant le courant gazeux (1), l'axe des orifices (6) d'émission de la nappe étant dirigé de façon à longer la périphérie du courant gazeux (1) en faisant un angle avec la direction d'écoulement du courant gazeux et créant ainsi une dépression dynamique autour de ce courant.

13. Dispositif selon la revendication 12, caractérisé en ce que les moyens engendrant la nappe gazeuse comprennent une couronne de soufflage (5) entourant le courant gazeux, munie d'orifices (6) dont les axes font avec la direction d'écoulement du courant gazeux un angle de 10 à 60°.

14. Dispositif selon l'une quelconque des revendications 12 et 13, caractérisé en ce que les moyens engendrant la nappe gazeuse comprennent deux couronnes de soufflage concentriques (17, 20), dont les orifices d'émission sont proches et dont les axes présentent des directions distinctes.

15. Dispositif selon l'une des revendications 12 à 14 dans lequel les fibres et le courant qui les véhicule proviennent d'un dispositif de fibrage centrifuge du type à tambour perforé (7), caractérisé en ce que les moyens engendrant la nappe gazeuse sont disposés sur le trajet des gaz d'étirage soufflés à la périphérie du tambour, et en amont de la zone (22) dans laquelle les gaz d'étirage se resserrent après avoir longé le tambour de centrifugation.

16. Dispositif selon les revendications 12 et 15, caractérisé en ce que les orifices de la couronne de soufflage sont disposés à distance suffisante du générateur de gaz d'étirage pour que l'action de la nappe gazeuse sur le courant gazeux portant les fibres n'intervienne qu'une fois les fibres à l'état solide.

## Claims

1. Process for improving the distribution over a receiving surface of fibres carried by a gaseous current directed towards the receiving surface, characterised in that a layer of gas is directed so as to extend along the fibre-carrying gaseous current and around its periphery to surround it over a part of its path, the direction of flow of this layer of gas in the plane tangential to the gaseous current being angled relative to the direction of flow of the gaseous current, thus creating a dynamic pressure reduction around the gaseous current carrying the fibres.

2. Process according to claim 1, characterised in that the fibre-carrying gaseous current has, transverse to its direction of flow, a substantially circular section and in that the layer of gas which surrounds it has a concentric annular section.

3. Process according to claim 2, characterised in that the layer of gas surrounding the gaseous current transmits to the gaseous current a rotational movement this axis of which coincides with the initial direction of the gaseous current.

4. Process according to any of claims 1 to 3, characterised in that the ratio of the energy of the layer of gas $I_S$ to that of the modified current $I_B$ is such that $0.5 \leqslant J_S/I_B \leqslant 2$.

5. Process according to any one of the preceeding claims, characterised in that the layer of gas is formed from a series of individual jets.

6. Process according to any of the preceeding claims, characterised in that the direction of flow of the layer in the plane tangential to the current makes an angle between 10 and 60° with the direction flow of the current.

7. Process according to any one of the preceeding claims, characterised in that the direction of the layer of gas also includes a component in the plane perpendicular to the tangential plane and which includes the axis of the gaseous current.

8. Process according to claim 7, characterised in that in the plane perpendicular to the tangential plane and including the axis of the gaseous current, the component of the layer of gas forms an angle with the direction of flow of the current which does not exceed 20° towards the interior of the current or 45° towards the exterior thereof.

9. Process according to any one of the preceeding claims, characterised in that the action of the layer of gas on the current operates at a point where the transported fibres are in the solid state.

10. Process according to any one of the preceeding claims, characterised in that the layer of gas in formed from air at ambient temperature.

11. Process according to any one of the preceeding claims, characterised in that the layer of gas is formed from two layers at different angles to the direction of flow of the gaseous current, and in that the resultant effect of the layer is controlled by adjusting the relative energies of each of these two sheets.

12. Apparatus for improving the distribution over a receiving surface (2) of fibres transported by a gaseous current (1) and directed towards that surface, characterised in that it includes, upstream of the receiving surface and in the path of the gaseous current (1), means (5), to create a layer of gas enveloping the gaseous current (1), the axis of the outlet orifices (6) of the layer being directed so as to extend along the periphery of the gaseous current (1), making an angle with the direction of flow of the gaseous current and thus creating a dynamic pressure reduction around that current.

13. Apparatus according to claim 12, characterised in that the means for creating the layer of gas includes a blowing ring (5) surrounding the gaseous current, and provided with orifices (6) the axes of which make an angle of 10 to 60° with the direction of flow of the gaseous current.

14. Apparatus according to either of claims 12 or 13, characterised in that the means creating the gaseous sheet include two concentric blowing rings (17, 20) the emission orifices of which are close to one another and the axes of which are in separate directions.

15. Apparatus according to any one of claims 12 to 14 in which the fibres and the current which transports them emerge from a centrifugal fibre-forming apparatus of the perforated-drum type (7), characterised in that the means to create the layer of gas is arranged in the path of the drawing gas blown past the periphery of the drum, and upstream of the zone (22) in which the drawing gas stream contracts after having passed along the centrifugation drum.

16. Apparatus according to claims 12 to 15, characterised in that the orifices in the blowing ring are arranged at a sufficient distance from the drawing gas generator for the action of the layer of gas on the fibre-carrying gaseous current to act only once on the fibres in the solid state.

## Patentansprüche

1. Verfahren zur Verbesserung der Verteilung von Fasern, auf einer Ablagefläche, bei dem die Fasern von einem auf die Ablagefläche gerichteten Gasstrom befördert werden, dadurch gekennzeichnet, daß ein Gasmantel derart ausgerichtet ist, daß er auf einem Bereich seiner Bahn an der Außenfläche des die Fasern tragenden Gasstromes entlang zieht und den Gasstrom einhüllt, wobei die Strömungsrichtung dieses Gasmantels in einer Tangentialebene an den Gasstrom einen Winkel mit der Strömungsrichtung des Gasstromes einschließt und so einen dynamischen Unterdruck um den die Fasern tragenden Gasstrom erzeugt.

2. Verfahren nach Anspruch 1, dadurch gekennzeichnet, daß der die Fasern tragende Gastrom quer zu seiner Strömungsrichtung einen im wesentlichen kreisförmigen Querschnitt aufweist, und daß der Gasmantel, der ihn umschließt, einen konzentrischen ringförmigen Querschnitt aufweist.

3. Verfahren nach Anspruch 2, dadurch gekennzeichnet, daß der den Gasstrom umschließende Gasmantel auf den Gasstrom eine Drehbewegung aufbringt, deren Achse mit der Anfangsrichtung des Gasstromes zusammenfällt.

4. Verfahren nach einem der Ansprüche 1 bis 3, dadurch gekennzeichnet, daß das Verhältnis des Impulses $I_S$ des Gasmantels zu dem Impuls $I_B$ der resultierenden Strömung in dem Bereich $0,5 \leqslant I_S/I_B \leqslant 2$ liegt.

5. Verfahren nach einem der vorhergehenden Ansprüche, dadurch gekennzeichnet, daß der Gasmantel ausgehend von einer Reihe von einzelnen Gasstrahlen gebildet wird.

6. Verfahren nach einem der vorhergehenden Ansprüche, dadurch gekennzeichnet, daß die Strömungsrichtung des Gasmantels in der Tangentialebene an den Gasstrom mit der Strömungsrichtung des Gasstromes einen Winkel zwischen 10° und 60° einschließt.

7. Verfahren nach einem der vorhergehenden Ansprüche, dadurch gekennzeichnet, daß die Richtung des Gasmantels auch eine Komponente in der zur Tangentialebene orthogonalen Ebene aufweist, die die Achse des Gasstromes enthält.

8. Verfahren nach Anspruch 7, dadurch gekennzeichnet, daß die Komponente des Gasmantels in der zu Tangentialebene orthogonalen und die Achse des Gasstromes enthaltenden Ebene mit der Strömungsrichtung des Gasstromes einen Winkel einschließt, der 20° in Richtung nach innen oder 45° in Richtung auf die Umgebung des Gasstromes nicht übersteigt.

9. Verfahren nach einem der vorhergehenden Ansprüche, dadurch gekennzeichnet, daß die Einwirkung des Gasmantels auf den Gasstrom an einem Punkt erzeugt wird, an dem die mitbewegten Fasern sich in einem festen Zustand befinden.

10. Verfahren nach einem der vorhergehenden Ansprüche, dadurch gekennzeichnet, daß der Gasmantel aus Luft mit Umgebungstemperatur gebildet wird.

11. Verfahren nach einem der vorhergehenden Ansprüche, dadurch gekennzeichnet, daß der Gasmantel ausgehend von zwei Mänteln gebildet wird, welche unterschiedliche Winkel mit der Strömungsrichtung des Gasstromes einschließen, und daß die Wirkung des resultierenden Mantels dadurch geregelt wird, daß das Verhältnis der jeweiligen Impulse jedes der beiden Mäntel verändert wird.

12. Vorrichtung zur Verbesserung der Verteilung von Fasern auf einer Ablagefläche (2), wobei die Fasern von einem auf die Ablagefläche gerichteten Gasstrom (1) befördert werden, dadurch gekennzeichnet, daß sie stromauf der Ablagefläche auf dem Weg des Gasstromes (1) eine Einrichtung (5) aufweist, welche einen den Gasstrom (1) umhüllenden Gasmantel erzeugt, wobei die Achse von Austrittsöffnungen (6) für den Gasmantel derart ausgerichtet ist, daß sie an der Außenfläche des Gasstromes (1) entlangläuft, dabei einen Winkel mit der Strömungsrichtung des Gasstromes einschließt und dadurch einen dynamischen Unterdruck um den Gasstrom herum erzeugt.

13. Vorrichtung nach Anspruch 12, dadurch gekennzeichnet, daß die den Gasmantel erzeugende Einrichtung einen den Gasstrom umgebenden Einblaskranz (5) aufweist, welcher mit Öffnungen (6) versehen ist, deren Achsen mit der Strömungsrichtung des Gasstromes einen Winkel von 10° bis 60° einschließen.

14. Vorrichtung nach einem der Ansprüche 12 oder 13, dadurch gekennzeichnet, daß die den Gasmantel erzeugende Einrichtung zwei Einblaskränze (17, 20) aufweist, deren Einblasöffnungen nahe beieinander angeordnet sind und deren Achsen definierte Richtungen aufweisen.

15. Vorrichtung nach einem der Ansprüche 12 bis 14, in der die Fasern und der sie befördernde Strom aus einem Zentrifugen-Zerfaserungsaggregat vom Typ einer perforierten Trommel (7) austreten, dadurch gekennzeichnet, daß die den Gasmantel erzeugende Einrichtung an dem Weg von Ausziehgasströmen, die an den Außenumfang der Trommel geblasen werden und Stromauf derjenigen Zone (22) angeordnet ist, in der die Ausziehgasströme kontrahieren, nachdem sie entlang der Zentrifugentrommel geströmt sind.

16. Vorrichtung nach einem der Ansprüche 12 und 15, dadurch gekennzeichnet, daß die Öffnungen des Einblaskranzes in solch ausreichender Entfernung von dem Erzeugungsaggregat für den Ausziehgasstrom angeordnet sind, daß die Einwirkung des Gasmantels auf den die Fasern tragenden Gasstrom erst auftritt, wenn die Fasern in einem festen Zustand sind.

**Fig.1a**

**Fig.1b**

**Fig.4**

1

**Fig.2a**

**Fig.2b**

**Fig.3a**

**Fig.3b**

Fig. 5a

0 072 300

Fig.5c

Fig.5a

Fig.5b

Fig.5d

4

Fig.6

Fig.7